# EUROPÄISCHE PATENTSCHRIFT

(11) **EP 4 082 751 B1**
(45) Veröffentlichungstag und Bekanntmachung des Hinweises auf die Patenterteilung: **13.03.2024**
(21) Anmeldenummer: 21171205.4
(22) Anmeldetag: 29.04.2021
(51) Int. Cl.: B29C 49/42, B29C 49/06, B29K 67/00, B29L 31/00, F16K 31/122

(54) **VERFAHREN ZUM BETREIBEN EINER VENTILEINHEIT UND VENTILEINHEIT**
METHOD FOR OPERATING A VALVE UNIT AND VALVE UNIT
PROCÉDÉ DE MISE EN OEUVRE D'UNE UNITÉ DE VALVES ET UNITÉ DE VALVES

(43) Veröffentlichungstag der Anmeldung: 02.11.2022
(73) Patentinhaber: Eugen Seitz AG, 8623 Wetzikon (CH)
(72) Erfinder: SCHMIDT, Joachim, 8442 Hettlingen (CH)
(74) Vertreter: Clerc, Natalia

(56) Entgegenhaltungen:
- EP-A1- 2 402 143
- EP-A1- 3 530 431
- WO-A1-2012/034953
- US-A1- 2016 332 355

## Beschreibung

### TECHNISCHES GEBIET

Die vorliegende Erfindung betrifft ein Verfahren zum Betreiben einer Ventileinheit sowie eine Ventileinheit, insbesondere zum pneumatischen Schalten in einem Blasformprozess. Die Ventileinheit eignet sich insbesondere zur Verwendung in einer Blaseinrichtung zur Formung von Hohlkörpern, insbesondere einer Streckblasmaschine.

### STAND DER TECHNIK

Blaseinrichtungen bzw. Blasmaschinen zur Formung von Hohlkörpern sind hinreichend aus dem Stand der Technik bekannt. Üblicherweise wird ein vortemperierter Vorformling aus einem thermoplastischen Kunststoff, vorzugsweise aus Polyethylenterephtalat (PET), mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen. Je nach Verfahren wird nur geblasen oder der Rohling, d.h. der Vorformling, wird zudem während des Blasens mittels eines verschiebbaren Dorns bzw. einer verschiebbaren Reckstange, gestreckt. Dieses zweite Verfahren wird Streckblasen genannt.

Das Einblasen des Prozessgases erfolgt üblicherweise über zwei oder mehr Stufen. Das Vorblasen findet bei einem tieferen Druck statt als das nachfolgende Hauptblasen. Bei der Entlüftung des Hohlkörpers nach dem Blasprozess wird das Prozessgas, insbesondere Druckluft, rückgewonnen und/oder nach aussen geführt.

Die einzelnen Blasschritte wie auch das Entlüften werden mittels Ventilen gesteuert. Die Herstellung bzw. Formung derartiger Hohlkörper mittels Blasmaschinen erfolgt innerhalb weniger Sekunden, vorzugsweise innerhalb von 1 bis 3 s. Die Fluidverbindungen zwischen den Ventilen und der Blasdüse sollten somit möglichst kurz und Toträume sollten möglichst minimiert sein.

WO 2012/034953 A1, EP 3 530 431 A1 und EP 2 402 143 A1 offenbaren Ventile für Blasmaschinen, wobei Ventil pneumatische Kolben mit entsprechenden Steuerflächen aufweisen.

EP 1 574 771 A2 offenbart ein luftgesteuertes Ventil für Streckblasmaschinen. Ein unterer Ventilraum befindet sich auf einer unteren Seite eines bewegbaren Kolbens. Er verbindet eine Speisedruckeingangsleitung mit einer Speisedruckausgangsleitung, die beide auf dieser unteren Seite des Kolbens angeordnet sind. Eine Verbindungsleitung verbindet den unteren Ventilraum mit einem oberen Ventilraum, der in einem Sackloch auf der oberen Seite des Kolbens ausgebildet ist. Der Kolben bildet einen nach aussen vorstehenden Ring aus, dessen Unterseite als Steuerfläche dient, die mit einem Steuerdruck zur Betätigung des Ventils beaufschlagbar ist. An einer Oberseite des Rings ist ein weiterer Ventilraum ausgebildet, der Umgebungsdruck aufweist.

EP 2 142 830 B1 und EP 2 167 303 B1 zeigen luftgesteuerte Ventile für Hohlkörperblasmaschinen. Das Ventil weist eine durch den Kolben verlaufende Verbindungsleitung für den Speisedruck auf. Ein nach aussen vorstehender Ring definiert eine ringförmige untere Steuerkammer und eine ringförmige obere Steuerkammer. Die zwei Steuerkammern sind mit derselben Steuerdruckquelle verbunden. Die obere Steuerkammer ist direkt mit der Steuerdruckquelle verbunden, die untere Steuerkammer lässt sich mittels eines Ventils wahlweise mit dem Steuerdruck beaufschlagen und entlüften. Dadurch lässt sich der Kolben in seiner geschlossenen Stellung halten.

EP 3 105 032 B1 verwendet ein 5/2 Wegeventil, um zwei Steuerkammern, die sich oberhalb und unterhalb eines nach aussen ragenden Rings des Kolbens befinden, wahlweise mit einem Steuerdruck aus derselben Steuerdruckquelle zu beaufschlagen.

WO 2019/105783 A1 beschreibt eine Ventileinheit, deren Kolben eine spitz zulaufende Dichtungskrone ausbildet, wobei der Dichtungssitz aus einem weichen Material gebildet ist. Diese Ausbildung ist insbesondere für schnell schaltende Prozessventile einer Extrusions- oder einer Streckblasmaschine zur Fertigung von Hohlkörpern aus Kunststoff geeignet.

Diese Ventile weisen den Nachteil auf, dass der Platzbedarf für den Kolben relativ gross ist. Die Verwendung von zwei 3/2 Wegeventilen oder einem 5/2 Wegeventil erhöht zudem die Herstellungskosten. Ferner benötigen diese Ventile relativ viele Dichtungen pro Kolben. Dies erhöht die Herstellungs- und Wartungskosten. Zudem ist dadurch die Reibung erhöht.

Es gibt seit Jahren Bestrebungen, die Prozessventile für Hohlkörperblasmaschinen, insbesondere für Streckblasmaschinen, zu verbessern, damit sie sowohl möglichst kurze Reaktionszeiten, ein möglichst prozessdruckunabhängiges Schaltverhalten und zudem eine kompakte und ergonomische Bauart aufweisen.

### DARSTELLUNG DER ERFINDUNG

Es ist deshalb eine Aufgabe der Erfindung, eine optimierte Ventileinheit zu schaffen, die die drei oben genannten Bestrebungen erfüllt.

Diese Aufgabe lösen ein Verfahren zur Betätigung einer Ventileinheit mit den Merkmalen des Patentanspruchs 1 sowie eine Ventileinheit mit den Merkmalen des Patentanspruchs 9.

Im erfindungsgemässen Verfahren zur Betätigung einer Ventileinheit weist die Ventileinheit einen Prozessdruckeingang, einen Prozessdruckausgang und einen den Prozessdruckeingang mit dem Prozessdruckausgang verbindenden Ventilraum und einen bewegbaren Kolben zum Schliessen und Öffnen der Verbindung zwischen Prozessdruckeingang und Prozessdruckausgang auf. Der Kolben ist auf einer ersten Seite mit einem ersten Steuerdruck und auf einer zweiten Seite mit einem zweiten Steuerdruck beaufschlagbar. Der Kolben wird mittels des ersten Steuerdrucks und des zweiten Steuerdrucks zwecks Schliessen und Öffnen der Verbindung bewegt. Erfindungsgemäss wird der Kolben im Betriebszustand der Ventileinheit permanent mit dem ersten Steuerdruck beaufschlagt und der Kolben wird zur Bewegung des Kolbens in eine Richtung zusätzlich mit dem zweiten Steuerdruck beaufschlagt. Dabei wird als erster Steuerdruck ein Druck verwendet, der höher als Atmosphärendruck und tiefer als der zweite Steuerdruck ist.

Die zweite Seite ist in eine entgegengesetzte Richtung angeordnet, so dass der erste und der zweite Steuerdruck in zwei einander entgegengesetzte Richtungen wirken.

Permanent bedeutet hier, dass der erste Steuerdruck während der Betriebszeit des Ventils anhaltend und dauernd angelegt wird.

Diese Ventileinheit lässt sich somit mittels eines einzigen Pilotventils, vorzugsweise einem einzigen kostengünstigen und kompakten 3/2 Wegeventil, betätigen. Der permanent angelegte Steuerdruck wirkt als Luftfeder. Der Kolben lässt sich dadurch sehr schnell betätigen und erfüllt somit die Anfordernisse an ein Prozessventil für Blasformvorrichtungen bezüglich den gewünschten Reaktionszeiten bestens.

Zudem lässt sich der Kolben und somit die gesamte Ventileinheit relativ kompakt ausbilden.

Ferner genügen eine geringe Anzahl Dichtungen, um den Kolben gegenüber einer Kolbenaufnahme, beispielsweise gegenüber einem Gehäuse und/oder einer Führung, zu dichten. Dies vermindert die Betriebskosten.

Vorzugsweise ist der erste Steuerdruck ein zeitlich konstanter Druck. Zeitlich konstant bedeutet in diesem Zusammenhang, dass sich der Druck im Betriebszustand der Ventileinheit nicht oder kaum in seiner Grösse ändert. Leichte Schwankungen der Druckquelle sind akzeptabel.

Vorzugsweise wird der Kolben mittels des ersten Steuerdrucks in seiner geschlossenen oder in seiner offenen Stellung gehalten. Vorzugsweise ist die Ventileinheit bidirektional einsetzbar, vorzugsweise durch Umkehrung der Druckanschlüsse des ersten und zweiten Steuerdruckraums. Dadurch lässt sich derselbe Ventiltyp, in Abhängigkeit davon, wo die Permanentdruckquelle und das Pilotventil mit seiner weiteren Druckquelle angeschlossen werden, für verschiedene Anwendungsbereiche einsetzen.

Vorzugsweise wird ein Kolben verwendet, der bezüglich eines Prozessdrucks druckausgeglichen ist und der ausschliesslich mittels des ersten Steuerdrucks und des zweiten Steuerdrucks bewegt wird. Derartige Ventileinheiten weisen ein optimales Schaltverhalten auf.

In bevorzugten Varianten wirkt der erste Steuerdruck auf eine zentrale Fläche des Kolbens. Dies ermöglicht eine kompakte und ausgewogene Ausbildung der Ventileinheit. In einer bevorzugten Variante wirkt der erste Steuerdruck auf eine im Kolben vertieft ausgebildete Fläche. Vorzugsweise wirkt der zweite Steuerdruck auf eine äussere Ringfläche des Kolbens.

In anderen Varianten wirkt der zweite Steuerdruck auf eine zentrale Fläche des Kolbens und der erste Steuerdruck auf eine äussere Ringfläche des Kolbens, wobei der zweite Steuerdruck vorzugsweise auf eine im Kolben vertieft ausgebildete Fläche wirkt.

Die erfindungsgemässe Ventileinheit eignet sich insbesondere zur Anwendung des oben genannten Verfahrens. Die erfindungsgemässe Ventileinheit, insbesondere einer Blasformvorrichtung, weist einen Prozessdruckeingang, einen Prozessdruckausgang und einen den Prozessdruckeingang mit dem Prozessdruckausgang verbindenden Ventilraum sowie einen bewegbaren Kolben zum Schliessen und Öffnen der Verbindung zwischen Prozessdruckeingang und Prozessdruckausgang auf. Der Kolben weist auf einer ersten Seite eine erste Steuerdruckfläche auf, die mit einem ersten Steuerdruck beaufschlagbar ist. Auf einer zweiten Seite, die der ersten Seite entgegen gesetzt ist, weist der Kolben eine zweite Steuerdruckfläche auf, die mit einem zweiten Steuerdruck beaufschlagbar ist. Der Kolben ist mittels des ersten Steuerdrucks und des zweiten Steuerdrucks zwecks Schliessen und Öffnen der Verbindung bewegbar. Erfindungsgemäss bildet
a) die erste Steuerdruckfläche eine zentrale Fläche des Kolbens oder
b) die erste Steuerdruckfläche in einer obersten Fläche des Kolbens eine Ringfläche.

Die zweite Steuerdruckfläche bildet jeweils eine dem Kolben nach aussen vorstehende Ringfläche.

Diese Ventileinheit lässt sich kompakt und mit einem Minimum an Dichtungen ausbilden, die den Kolben gegenüber der Kolbenaufnahme, beispielsweise gegenüber einer Führung und/oder einem Gehäuse, dichten.

Vorzugsweise ist der Kolben bezüglich des Prozessdrucks druckausgeglichen ausgebildet. Dies optimiert das Schaltverhalten der Ventileinheit.

In bevorzugten Ausführungsformen bildet die erste Steuerdruckfläche eine zentrale Fläche des Kolbens, die vertieft im Kolben angeordnet ist.

Vorzugsweise ist der Ventilraum ein erster Ventilraum und der Kolben weist mindestens eine Druckausgleichsbohrung auf, die den ersten Ventilraum mit einem zweiten Ventilraum verbindet, der auf der dem ersten Ventilraum gegenüberliegenden Seite des Kolbens angeordnet ist. Dadurch lässt sich eine kompakte, bezüglich des Prozessdrucks druckausgeglichene Ventileinheit schaffen.

Vorzugsweise sind die erste Steuerdruckfläche und die zweite Steuerdruckfläche annähernd, vorzugsweise genau, gleich gross. Dies erleichtert die Berechnung der optimalen Druckverhältnisse der zwei Steuerdrücke.

Aufgrund der gleich grossen Flächen ist der Kolben druckausgeglichen. Die Antriebskräfte für die Bewegung des Kolbens sind dadurch minimiert, so dass die Steuerflächen des Kolbens minimiert sind und sich der Kolben insgesamt kompakt und klein gestalten lässt.

In bevorzugten Ausführungsformen weist der Kolben eine erste Prozessdruckfläche und eine zweite, der ersten Prozessdruckfläche gegenüberliegende zweite Prozessdruckfläche auf, wobei die erste Prozessdruckfläche und die zweite Prozessdruckfläche annähernd, vorzugsweise genau, gleich gross sind. Auch dies ermöglicht die Ausbildung eines bezüglich des Prozessdrucks druckausgeglichenen Ventils.

Vorzugsweise weist der Kolben eine Längsachse auf und die erste Steuerdruckfläche und die zweite Steuerdruckfläche sind entlang der Längsachse benachbart zueinander angeordnet. Die Länge des Kolbens lässt sich dadurch minimieren und somit auch die Grösse der gesamten Ventileinheit.

Die Verwendung einer Führungsschürze innerhalb eines Ventilgehäuses, die den Schaltkolben hält und führt und die mindestens teilweise eine innere Begrenzung mindestens eines Teils des Ventilraums bildet, ist eine eigenständige Erfindung und wird hiermit ohne die übrigen Merkmale ebenfalls beansprucht. Dies betrifft insbesondere derartige Führungsschürzen, die sich in ihrem Aussendurchmesser verjüngen, insbesondere konisch ausgebildet sind. Insbesondere lassen sich derartige Ventile auch auf andere Art und Weise betreiben, beispielsweise mit zwei Pilotventilen und ohne permanent angelegtem Steuerdruck.

Ferner wird die gesamte Ausbildung des kompakten Prozessventils als separate und eigenständige Erfindung beansprucht. Insbesondere die kompakte Gestaltung des Kolbens mit dem vertieften oberen Steuerraum und dem in die Vertiefung ragenden Führungszapfen des oberen Gehäuseteils wird hiermit separat beansprucht. Das Prozessventil lässt sich ferner ebenfalls auf andere Art und Weise betreiben, beispielsweise mit zwei Pilotventilen und ohne permanent angelegtem Steuerdruck.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: einen Längsschnitt durch eine erfindungsgemässe Ventileinheit in geschlossener Stellung;
- Figur 2: die Ventileinheit gemäss Figur 1 in geöffneter Stellung;
- Figur 3: eine Explosionsdarstellung durch einen Teil der Ventileinheit gemäss Figur 1 und
- Figur 4: ein Schaltbild der Ventileinheit gemäss Figur 1.

### BESCHREIBUNG BEVORZUGTER AUSFÜHRUNGSFORMEN

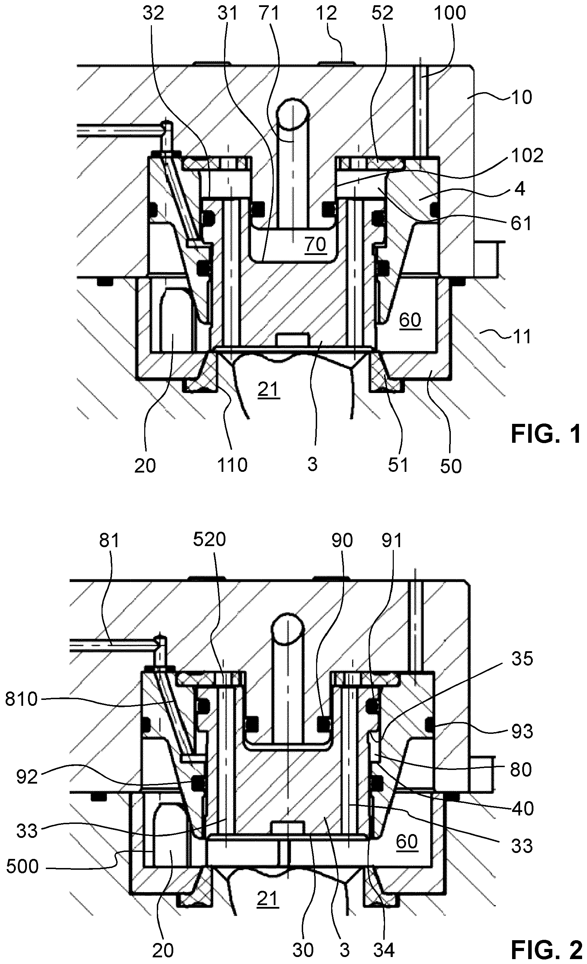

In den Figuren 1 und 2 ist eine erfindungsgemässe Ventileinheit mit einem Prozessventil, vorzugsweise einem Blasventil einer Blasformmaschine, dargestellt. Das Blasventil ist beispielsweise ein Hauptblasventil oder ein Vorblasventil.

Die Ventileinheit weist im Wesentlichen einen Kolben 3 und eine Kolbenaufnahme auf, in der der Kolben 3 bewegbar gehalten ist und in der Ventilräume und Steuerräume ausgebildet sind.

Die Kolbenaufnahme ist je nach Ausführungsform unterschiedlich ausgebildet. Sie ist beispielsweise durch ein eigenes ein- oder mehrteiliges Gehäuse gebildet. In anderen Ausführungsformen ist sie Teil eines Steuerblocks einer Blasmaschine. In weiteren Ausführungsformen ist sie beispielsweise Teil eines Steuerblocks und eines Deckels, wobei sie noch weitere Bauteile umfasst oder nur aus diesen zwei Bauteilen besteht.

Im hier dargestellten Beispiel ist die Kolbenaufnahme durch eine Führungsschürze 4 und einen unteren Gehäuseteil 11 und oberen Gehäuseteil 10 gebildet. Die zwei Gehäuseteile 10, 11 bilden einen Hohlraum, in welchem die Führungsschürze 4 ortsfest angeordnet ist. Die Führungsschürze 4 umgibt den Kolben 3, der relativ zur Führungsschürze 4 und somit zu den zwei Gehäuseteilen 10, 11 in Längsrichtung verschiebbar ist.

Ein unteres Gehäuseteil 11 ist beispielsweise ein Steuerblock einer Blasmaschine, durch welchen eine Blasdüse verläuft. Ein oberes Gehäuseteil 10 ist beispielsweise ein Ventilblock, an welchem zudem das Pilotventil der Ventileinheit befestigt ist. Je nach Ausführungsbeispiel bilden die zwei Gehäuseteile 10, 11 mehr als einen Hohlraum zur Aufnahme derartiger Ventileinheiten aus.

Die Begriffe "unten" und "oben" beziehen sich auf die Ausrichtung in den Figuren 1 und 2. Die Ventileinheit kann in einer anderen Position verwendet werden. Somit sind "unten" und "oben" auch als "erstes" und "zweites" ohne Richtungsangabe in Bezug auf die Position der Ventileinheit im dreidimensionalen Raum zu verstehen.

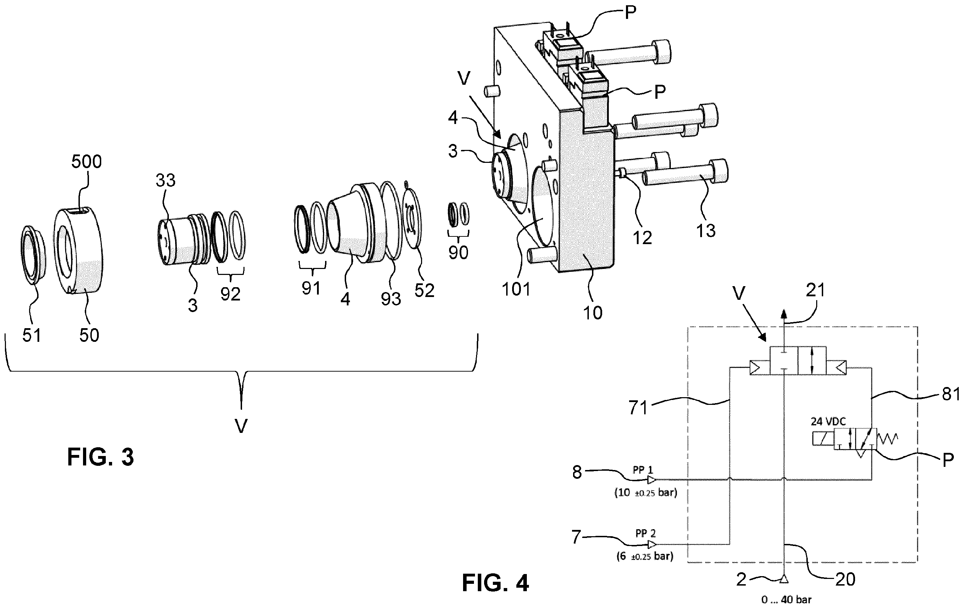

Ein Ventilblock mit zwei Prozessventilen V und zugehörigen Pilotventilen P zur Steuerung der Prozessventile V ist in Figur 3 dargestellt. Er lässt sich beispielsweise in Form eines Deckels an einen Steuerblock einer Blasmaschine anschrauben. Die hierzu verwendeten ersten Befestigungsschauben sind in Figur 3 mit der Bezugsziffer 12 gekennzeichnet. Eine entsprechende Bohrung 100 zur Aufnahme der ersten Befestigungsschrauben 12 ist in den Figuren 1 und 2 erkennbar.

Dieses obere Gehäuseteil 10 weist der Anzahl der Prozessventile V entsprechende kreiszylinderförmige Ausnehmungen 101 auf, die Sacklöcher bilden. Der Boden des Sacklochs bildet vorzugsweise einen nach innen in die Ausnehmung 101 ragenden Führungszapfen 102 aus (Figuren 1 und 2).

Die Prozessventile V sind von einer ersten Seite in diese Ausnehmungen 101 eingeschoben. Sie sind vorzugsweise am oberen Gehäuseteil 10 lösbar befestigt, vorzugsweise von der gegenüberliegenden Seite mittels der ersten Befestigungsschrauben 12.

Vorteilhaft an dieser Ausbildung ist, dass sich die einzelnen Bauteile des Prozessventils V, mit Ausnahme des später erwähnten Niederhalters 50 und der Sitzdichtung 51 gemeinsam im oberen Gehäuseteil 10 anordnen und befestigen lassen, um anschliessend gemeinsam mit dem oberen Gehäuseteil 10 am unteren Gehäuseteil 11, z.B. an einem Steuerblock, fixiert zu werden, beispielsweise mittels zweiten Befestigungsschrauben 13. Dies erleichtert die Montage, jedoch auch den Serviceunterhalt der Ventile.

Das obere und untere Gehäuseteil 10, 11 sind vorzugsweise als massive Bauteile ausgebildet, die, wo notwendig, mit Ausnehmungen, Bohrungen und Kanälen versehen sind.

Dichtungen 90, 91, 92, 93, vorzugsweise Dichtungsringe oder Dichtungsring-Paare, dichten die Führungsschürze 4 und den Kolben 3 gegenüber den Gehäuseteilen 10, 11 und den Kolben 3 gegenüber der Führungsschürze 4 ab. Ein erster Dichtring bzw. ein erstes Dichtringpaar 90 bildet eine erste Dichtung zwischen dem Führungszapfen 102 und dem Kolben 3. Ein zweiter Dichtring bzw. ein zweites Dichtringpaar 91 bildet eine erste Dichtung zwischen dem Kolben 3 und der Führungsschürze 4. Ein dritter Dichtring bzw. ein drittes Dichtringpaar 92 bildet eine zweite Dichtung zwischen dem Kolben 3 und der Führungsschürze 4. Ein vierter Dichtring bzw. ein viertes Dichtringpaar 93 bildet eine Dichtung zwischen der Führungsschürze 4 und dem oberen Gehäuseteil 10.

Der Kolben 3 öffnet und verschliesst eine Verbindung zwischen einer von einer Prozessdruckquelle 2 (Figur 4) herkommenden Prozessdruck-Eingangsleitung 20 und einer zur Blasdüse der Blasmaschine führenden Prozessdruck-Ausgangsleitung 21. Ein entsprechender unterer Ventilraum trägt das Bezugszeichen 60.

Im unteren Gehäuseteil 11 ist eine Sitzdichtung 51 angeordnet. Sie ist vorzugsweise aus einem weichen, elastischen Ringkörper gebildet. Die Sitzdichtung 51 ist vorzugsweise, wie hier dargestellt, mittels eines Niederhalters 50 in einer Ausnehmung 110 des unteren Gehäuseteils 11 fixiert gehalten. Der Niederhalter 50 ist vorzugsweise ein Ringkörper aus einem steifen Material. Er ist vorzugsweise mittels des oberen Gehäuseteils 10 eingeklemmt und in seiner Position fixiert. Alternativ oder zusätzlich ist er mittels anderen Befestigungsmitteln am unteren Gehäuseteil 11 fixiert. Beispielsweise ist er direkt am unteren Gehäuseteil 11 angeschraubt. Der Niederhalter 50 weist vorzugsweise eine Durchlassöffnung 500 auf, in welche die Prozessdruck-Eingangsleitung 20 in den unteren Ventilraum 60 mündet.

Der Kolben 3 liegt in geschlossener Stellung auf der Sitzdichtung 51 auf und verschliesst somit die Verbindung zwischen der Prozessdruck-Eingangsleitung 20 und der Prozessdruck-Ausgangsleitung 21. Dies ist in Figur 1 dargestellt. Vorzugsweise weist der Kolben 3 eine spitz zulaufende, umlaufende Dichtungskrone auf, vorzugsweise wie sie in WO 2019/105783 A1 beschrieben ist.

Auf der gegenüberliegenden Seite ist oberhalb des Kolbens 3 ein Anschlagring 52 im oberen Gehäuseteil 10 angeordnet. Vorzugsweise ist er zwischen der Führungsschürze 4 und oberen Gehäuseteil 10 eingeklemmt. Vorzugsweise weist der Anschlagring 52 mindestens eine, vorzugsweise mehrere Durchgangsbohrungen 520 auf. Sie dienen dem Druckausgleich.

Der Anschlagring 52 ist vorzugsweise aus einem weicheren Material gefertigt als der Kolben 3. Vorzugsweise ist er aus einem weichen und flexible Material. Der Anschlagring 52 umgibt einen äusseren Umfang des Führungszapfens 102. Er ist vorzugsweise zwischen einer Stirnfläche der Führungsschürze 4 und einer inneren Oberfläche des oberen Gehäuseteils 10 eingeklemmt.

Die Führungsschürze 4 weist im Wesentlichen einen zylinderförmigen Grundkörper auf, der auf seiner Aussenseite in einen kegelstumpfförmigen Abschnitt übergeht. Der innere Durchmesser der Führungsschürze 4 ist im Wesentlichen zylinderförmig, wobei er eine umlaufende Stufe 40 aufweist. Die Führungsschürze 4 ist vorzugsweise aus einem steifen Material gebildet, vorzugsweise aus Metall. In Figur 1 ist das Prozessventil V im geschlossenen Zustand dargestellt. Der Kolben 3 überragt das freie konische Ende der Führungsschürze 4, wobei er von der Schürze 4 geführt ist.

Die Führungsschürze 4 ist vorzugsweise mittels den ersten Befestigungsschrauben 12 am oberen Gehäuseteil 10 befestigt, wobei sie dadurch auch den Kolben 3 im oberen Gehäuseteil 10 hält.

Der Kolben 3 weist vorzugsweise eine relativ einfache Form auf. Er ist vorzugsweise im Wesentlichen zylinderförmig ausgebildet mit einer zentralen Vertiefung auf seiner oberen Seite. Er weist somit ein Sackloch auf. In diese Vertiefung greift der Führungszapfen 102 des oberen Gehäuseteils 10 ein. Dazwischen ist ein erster Steuerraum 70 gebildet. Die nach oben gerichtete Stirnfläche 31 der Vertiefung bildet eine erste Steuerfläche aus.

Eine erste Steuerleitung 71 führt von einer ersten Steuerdruckquelle 7 (Figur 4) durch den Führungszapfen 102 in diesen ersten Steuerraum 70.

Der Kolben 3 weist an seinem äusseren Umfang eine umlaufende Stufe mit einer unteren Steuerfläche 35 auf, die das Gegenstück zur Stufe 40 der Führungsschürze 4 bildet. Zwischen diesen zwei Stufen wird ein zweiter Steuerraum 80 ausgebildet. Eine zweite Steuerleitung 81, 810 führt von einer zweiten Steuerdruckquelle 8 (Figur 4) durch das obere Gehäuseteil 10 und durch die Führungsschürze 4 in diesen zweiten Steuerraum 80.

Der Kolben 3 weist einen Bereich auf, der die Vertiefung ringförmig überragt und eine äussere obere Stirnfläche 32 ausbildet. Die gegenüberliegende untere Stirnfläche 30 befindet sich innerhalb der Dichtungskrone 34. Diese zwei Stirnflächen 30, 32 sind über mindestens einen, vorzugsweise mehrere Verbindungskanäle 33 verbunden, die durch den Kolben 3 verlaufen. Dadurch ist zwischen der äusseren oberen Stirnfläche 32 und dem oberen Gehäuseteil 10 ein oberer Ventilraum 61 geschaffen, der mit dem unteren Ventilraum 60 verbunden ist.

Die äussere obere Stirnfläche 32 und die untere Stirnfläche 30 sind vorzugsweise gleich gross, d.h. sie weisen dasselbe Flächenmass auf. Dadurch ist der Kolben 3 bezüglich des Prozessdrucks druckausgeglichen.

Die untere Steuerfläche 35 und die innere obere Stirnfläche 31 sind vorzugsweise ebenfalls gleich gross. Dadurch ist der Kolben auch bezüglich diesen zwei Flächen druckausgeglichen. Sie können jedoch ein anderes Flächenmass aufweisen als die äussere obere Stirnfläche 32 und die untere Stirnfläche 30.

In Figur 4 ist ein Schaltbild dargestellt, das in Kombination mit den Figuren 1 und 2 eine Funktionsart der Ventileinheit erkennen lässt.

Ein Prozessdruck, vorzugsweise 40 bar, wird mittels der Prozessdruckquelle 2 über die Prozessdruck-Eingangsleitung 20 zum Prozessventil V geführt. Der Kolben 3 des Prozessventils wirkt als luftgesteuerter Schaltkolben, der die Verbindung zur Prozessdruck-Ausgangsleitung 21 ermöglicht oder verschliesst.

Hierzu ist der erste Steuerraum 70 mit einem permanenten und vorzugsweise zeitlich konstanten ersten Steuerdruck beaufschlagt. Dieser wird von der ersten Steuerdruckquelle 7 über die erste Steuerleitung 71 zugeführt. Der erste Steuerdruck ist höher als ein Atmosphärendruck und beträgt vorzugsweise circa 6 bar.

Die Bewegung des Prozessventils V wird nun mittels eines einzigen Pilotventils P gesteuert. Das Pilotventil P ist mit einer zweiten Steuerdruckquelle 8 verbunden, die einen zweiten Steuerdruck zur Verfügung stellt. Dieser zweite Steuerdruck ist höher als der erste Steuerdruck. Er beträgt vorzugsweise 10 bar.

Das Prozessventil V ist somit dank des ersten Steuerdrucks im ersten Steuerraum 70 in geschlossener Stellung gehalten. Durch Anlegen des grösseren zweiten Steuerdrucks im zweiten Steuerraum 80 wird der Kolben 3 angehoben und im unteren Ventilraum 60, wie auch im mindestens einen Verbindungskanal 33 und dem oberen Ventilraum 61 herrscht nun Prozessdruck.

Wird das Pilotventil P geschlossen und der zweite Steuerdruck entfällt, so schliesst der Kolben 3 die Verbindung zwischen den Prozessleitungen 20, 21 dank des nach wie vor permanent auf die innere obere Stirnfläche bzw. Steuerfläche anliegenden ersten Steuerdrucks. Der permanent angelegte Steuerdruck wirkt als pneumatische Feder, insbesondere als Luftfeder.

Die Steuerdrücke und der Prozessdruck werden vorzugsweise mittels Druckluft erzeugt.

Die erfindungsgemässe Ventileinheit funktioniert bidirektional. So lässt sich der zweite Steuerraum mit dem permanenten ersten Steuerdruck beaufschlagen und der erste Steuerraum ist mit dem Pilotventil und somit mit dem wahlweise angelegten zweiten Steuerdruck beaufschlagbar. Dadurch ist das Prozessventil stets geöffnet und es lässt sich mittels des Pilotventils schliessen.

Des Weiteren lässt sich der Prozessdruck in umgekehrter Richtung dem Prozessventil V zuführen, ohne dass sich dadurch die Wirkungsweise der Ventileinheit verändert.

Ferner lässt sich die erste Steuerfläche 31 ringförmig ausbilden und die obere Stirnfläche 32, die das druckausgeglichene Gegenstück zur unteren Stirnfläche 30 bildet, lässt sich in einer Vertiefung oder Erhöhung in Bezug auf die ringförmige erste Steuerfläche 31 ausbilden.

In einer anderen Ausführungsform ist die erste Steuerfläche 31 nach wie vor zentral als in sich geschlossene Fläche ausgebildet. Sie ist jedoch in Bezug zur oberen Stirnfläche 32 erhöht ausgebildet.

Die erfindungsgemässe Ventileinheit lässt sich kostengünstig und kompakt ausbilden.

### BEZUGSZEICHENLISTE

| | | | |
|---|---|---|---|
| 10 | oberes Gehäuseteil | 50 | Niederhalter |
| 100 | Bohrung | 500 | Durchlassöffnung |
| 101 | Ausnehmung | 51 | Sitzdichtung |
| 102 | Führungszapfen | 52 | Anschlagring |
| 11 | unteres Gehäuseteil | 520 | Durchgangsbohrung |
| 110 | Bohrung | | |
| 12 | erste Befestigungsschrauben | 60 | unterer Ventilraum |
| | | 61 | oberer Ventilraum |
| 2 | Prozessdruckquelle | | |
| 20 | Prozessdruck- | 7 | erste Steuerdruckquelle |
| | Eingangsleitung | 70 | erster Steuerraum |
| 21 | Prozessdruck- Ausgangsleitung | 71 | erste Steuerleitung |
| | | 8 | zweite Steuerdruckquelle |
| 3 | Kolben | 80 | zweiter Steuerraum |
| 30 | untere Stirnfläche | 81 | zweite Steuerleitung |
| 31 | innere obere Stirnfläche | | |
| 32 | äussere obere Stirnfläche | 90 | erste Ringdichtung |
| 33 | Verbindungskanal | 91 | zweite Ringdichtung |
| 34 | Dichtungskrone | 92 | dritte Ringdichtung |
| 35 | untere Steuerfläche | 93 | vierte Ringdichtung |
| 4 | Führungsschürze | P | Pilotventil |
| 40 | Stufe | V | Prozessventil |

## Patentansprüche

1. Verfahren zur Betätigung einer Ventileinheit, wobei die Ventileinheit einen Prozessdruckeingang (20), einen Prozessdruckausgang (21) und einen den Prozessdruckeingang (20) mit dem Prozessdruckausgang (21) verbindenden Ventilraum (60) und einen bewegbaren Kolben (3) zum Schliessen und Öffnen der Verbindung zwischen Prozessdruckeingang (20) und Prozessdruckausgang (21) aufweist, wobei der Kolben (3) auf einer ersten Seite (31) mit einem ersten Steuerdruck beaufschlagbar ist und wobei der Kolben (3) auf einer zweiten (35) Seite mit einem zweiten Steuerdruck beaufschlagbar ist,
wobei der Kolben (3) mittels des ersten Steuerdrucks und des zweiten Steuerdrucks zwecks Schliessen und Öffnen der Verbindung bewegt wird,
**dadurch gekennzeichnet,**
**dass** der Kolben (3) im Betriebszustand der Ventileinheit permanent mit dem ersten Steuerdruck beaufschlagt wird,
**dass** der Kolben (3) zur Bewegung des Kolbens (3) in eine Richtung zusätzlich mit dem zweiten Steuerdruck beaufschlagt wird und
**dass** als erster Steuerdruck ein Druck verwendet wird, der höher als Atmosphärendruck und tiefer als der zweite Steuerdruck ist.

2. Verfahren nach Anspruch 1, wobei der erste Steuerdruck ein zeitlich konstanter Druck ist.

3. Verfahren nach einem der Ansprüche 1 oder 2, wobei der Kolben (3) mittels des ersten Steuerdrucks in seiner geschlossenen Stellung oder in seiner offenen Stellung gehalten wird.

4. Verfahren nach einem der Ansprüche 1 bis 3, wobei der Kolben (3) bezüglich eines Prozessdrucks druckausgeglichen ist und ausschliesslich mittels des ersten Steuerdrucks und des zweiten Steuerdrucks bewegt wird.

5. Verfahren nach einem der Ansprüche 1 bis 4, wobei der erste Steuerdruck auf eine zentrale Fläche (31) des Kolbens (3) wirkt.

6. Verfahren nach einem der Ansprüche 1 bis 5, wobei der erste Steuerdruck auf eine im Kolben (3) vertieft ausgebildete Fläche (31) wirkt.

7. Verfahren nach einem der Ansprüche 1 bis 6, wobei der zweite Steuerdruck auf eine äussere Ringfläche (35) des Kolbens (3) wirkt.

8. Verfahren nach einem der Ansprüche 1 bis 4, wobei der zweite Steuerdruck auf eine zentrale Fläche des Kolbens (3) wirkt und wobei der erste Steuerdruck auf eine äussere Ringfläche des Kolbens (3) wirkt, wobei der zweite Steuerdruck vorzugsweise auf eine im Kolben (3) vertieft ausgebildete Fläche wirkt.

9. Ventileinheit, insbesondere einer Blasformvorrichtung, wobei die Ventileinheit einen Prozessdruckeingang (20), einen Prozessdruckausgang (21) und einen den Prozessdruckeingang (20) mit dem Prozessdruckausgang (21) verbindenden Ventilraum (60) und einen bewegbaren Kolben (3) zum Schliessen und Öffnen der Verbindung zwischen Prozessdruckeingang (20) und Prozessdruckausgang (21) aufweist,
wobei der Kolben (3) auf einer ersten Seite eine erste Steuerdruckfläche (31) aufweist, die mit einem ersten Steuerdruck beaufschlagbar ist und wobei der Kolben (3) auf einer zweiten Seite eine zweite Steuerdruckfläche (35) aufweist, die mit einem zweiten Steuerdruck beaufschlagbar ist,
wobei der Kolben (3) mittels des ersten Steuerdrucks und des zweiten Steuerdrucks zwecks Schliessen und Öffnen der Verbindung bewegbar ist, **dadurch gekennzeichnet,**
- **dass**
a) die erste Steuerdruckfläche eine zentrale Fläche (31) des Kolbens (3) bildet oder
b) die erste Steuerdruckfläche in einer obersten Fläche des Kolbens (3) eine Ringfläche bildet
und
- **dass** die zweite Steuerdruckfläche eine dem Kolben (3) nach aussen vorstehende Ringfläche (35) bildet.

10. Ventileinheit nach Anspruch 9, wobei der Kolben (3) bezüglich des Prozessdrucks druckausgeglichen ausgebildet ist.

11. Ventileinheit nach einem der Ansprüche 9 oder 10, wobei die erste Steuerdruckfläche eine zentrale Fläche (31) des Kolbens (3) bildet, die vertieft im Kolben (3) angeordnet ist.

12. Ventileinheit nach einem der Ansprüche 9 bis 11, wobei der Ventilraum ein erster Ventilraum (60) ist und wobei der Kolben (3) mindestens eine Druckausgleichsbohrung (33) aufweist, die den ersten Ventilraum (60) mit einem zweiten Ventilraum (61) verbindet, der auf der dem ersten Ventilraum (60) gegenüberliegenden Seite des Kolbens (3) angeordnet ist.

13. Ventileinheit nach einem der Ansprüche 9 bis 12, wobei die erste Steuerdruckfläche (31) und die zweite Steuerdruckfläche (35) annähernd, vorzugsweise genau, gleich gross sind.

14. Ventileinheit nach einem der Ansprüche 9 bis 13, wobei der Kolben (3) eine erste Prozessdruckfläche (30) und eine zweite, der ersten Prozessdruckfläche (30) gegenüberliegende zweite Prozessdruckfläche (32) aufweist und wobei die erste Prozessdruckfläche (30) und die zweite Prozessdruckfläche (32) annähernd, vorzugsweise genau, gleich gross sind.

15. Ventileinheit nach einem der Ansprüche 9 bis 13, wobei der Kolben (3) eine Längsachse aufweist und wobei die erste Steuerdruckfläche (31) und die zweite Steuerdruckfläche (35) entlang der Längsachse benachbart zueinander angeordnet sind.

## Claims

1. Method for actuating a valve unit, wherein the valve unit has a process pressure inlet (20), a process pressure outlet (21) and a valve chamber (60) connecting the process pressure inlet (20) to the process pressure outlet (21) and a movable piston (3) for closing and opening the connection between the process pressure inlet (20) and the process pressure outlet (21), wherein the piston (3) is able to be subjected on a first side (31) to a first control pressure and wherein the piston (3) is able to be subjected on a second (35) side to a second control pressure,
wherein the piston (3) is moved by means of the first control pressure and the second control pressure for the purpose of closing and opening the connection,
**characterized in that**
in the operating state of the valve unit the piston (3) is permanently subjected to the first control pressure,
the piston (3) is additionally subjected to the second control pressure for moving the piston (3) in one direction and
a pressure which is higher than atmospheric pressure and lower than the second control pressure is used as the first control pressure.

2. Method according to Claim 1, wherein the first control pressure is a pressure which is constant over time.

3. Method according to one of Claims 1 or 2, wherein the piston (3) is held in its closed position or in its open position by means of the first control pressure.

4. Method according to one of Claims 1 to 3, wherein the piston (3) is pressure-compensated relative to a process pressure and exclusively moved by means of the first control pressure and the second control pressure.

5. Method according to one of Claims 1 to 4, wherein the first control pressure acts on a central surface (31) of the piston (3).

6. Method according to one of Claims 1 to 5, wherein the first control pressure acts on a surface (31) which is configured to be recessed in the piston (3).

7. Method according to one of Claims 1 to 6, wherein the second control pressure acts on an outer annular surface (35) of the piston (3).

8. Method according to one of Claims 1 to 4, wherein the second control pressure acts on a central surface of the piston (3) and wherein the first control pressure acts on an outer annular surface of the piston (3), wherein the second control pressure preferably acts on a surface which is configured to be recessed in the piston (3).

9. Valve unit, in particular of a blow-moulding device, wherein the valve unit has a process pressure inlet (20), a process pressure outlet (21) and a valve chamber (60) connecting the process pressure inlet (20) to the process pressure outlet (21), and a movable piston (3) for closing and opening the connection between the process pressure inlet (20) and the process pressure outlet (21),
wherein the piston (3) has on a first side a first control pressure surface (31) which is able to be subjected to a first control pressure and wherein the piston (3) has on a second side a second control pressure surface (35) which is able to be subjected to a second control pressure,
wherein the piston (3) is movable by means of the first control pressure and the second control pressure for the purpose of closing and opening the connection, **characterized**
**in that**
a) the first control pressure surface forms a central surface (31) of the piston (3) or
b) the first control pressure surface forms an annular surface in an uppermost surface of the piston (3)
and
**in that** the second control pressure surface forms an annular surface which protrudes outwardly from the piston (3).

10. Valve unit according to Claim 9, wherein the piston (3) is configured to be pressure-compensated relative to the process pressure.

11. Valve unit according to one of Claims 9 or 10, wherein the first control pressure surface forms a central surface (31) of the piston (3), which is arranged so as to be recessed in the piston (3).

12. Valve unit according to one of Claims 9 to 11, wherein the valve chamber is a first valve chamber (60) and wherein the piston (3) has at least one pressure-compensation bore (33) which connects the first valve chamber (60) to a second valve chamber (61) which is arranged on the side of the piston (3) opposing the first valve chamber (60).

13. Valve unit according to one of Claims 9 to 12, wherein the first control pressure surface (31) and the second control pressure surface (35) are approximately, preferably exactly, of the same size.

14. Valve unit according to one of Claims 9 to 13, wherein the piston (3) has a first process pressure surface (30) and a second process pressure surface (32) opposing the first process pressure surface and wherein the first process pressure surface (30) and the second process pressure surface (32) are approximately, preferably exactly, of the same size.

15. Valve unit according to one of Claims 9 to 13, wherein the piston (3) has a longitudinal axis and wherein the first control pressure surface (31) and the second control pressure surface (35) are arranged adjacently to one another along the longitudinal axis.

## Revendications

1. Procédé d'actionnement d'une unité de soupapes, dans lequel l'unité de soupapes présente une entrée de pression de traitement (20), une sortie de pression de traitement (21) et un espace de soupape (60) reliant l'entrée de pression de traitement (20) à la sortie de pression de traitement (21) et un piston déplaçable (3) servant à la fermeture et à l'ouverture de la liaison entre l'entrée de pression de traitement (20) et la sortie de pression de traitement (21), dans lequel le piston (3) peut être soumis à une première pression de commande sur un premier côté (31) et dans lequel le piston (3) peut être soumis à une deuxième pression de commande sur un deuxième (35) côté,
dans lequel le piston (3) est déplacé au moyen de la première pression de commande et de la deuxième pression de commande en vue de la fermeture et de l'ouverture de la liaison,
**caractérisé**
**en ce que** le piston (3) est soumis en permanence à la première pression de commande dans l'état de fonctionnement de l'unité de soupapes,
**en ce que** le piston (3) est soumis en outre à la deuxième pression de commande pour le déplacement du piston (3) dans un sens et
**en ce qu'**une pression qui est supérieure à la pression atmosphérique et inférieure à la deuxième pression de commande est utilisée en tant que première pression de commande.

2. Procédé selon la revendication 1, dans lequel la première pression de commande est une pression constante dans le temps.

3. Procédé selon l'une des revendications 1 ou 2, dans lequel le piston (3) est maintenu dans sa position fermée ou dans sa position ouverte au moyen de la première pression de commande.

4. Procédé selon l'une des revendications 1 à 3, dans lequel le piston (3) est équilibré en pression par rapport à une pression de traitement et est déplacé exclusivement au moyen de la première pression de commande et de la deuxième pression de commande.

5. Procédé selon l'une des revendications 1 à 4, dans lequel la première pression de commande agit sur une surface centrale (31) du piston (3).

6. Procédé selon l'une des revendications 1 à 5, dans lequel la première pression de commande agit sur une surface (31) réalisée de manière renfoncée dans le piston (3).

7. Procédé selon l'une des revendications 1 à 6, dans lequel la deuxième pression de commande agit sur une surface annulaire extérieure (35) du piston (3).

8. Procédé selon l'une des revendications 1 à 4, dans lequel la deuxième pression de commande agit sur une surface centrale du piston (3) et dans lequel la première pression de commande agit sur une surface annulaire extérieure du piston (3), dans lequel la deuxième pression de commande agit de préférence sur une surface réalisée de manière renfoncée dans le piston (3).

9. Unité de soupapes, en particulier d'un dispositif de moulage par soufflage, l'unité de soupapes présentant une entrée de pression de traitement (20), une sortie de pression de traitement (21) et un espace de soupape (60) reliant l'entrée de pression de traitement (20) à la sortie de pression de traitement (21) et un piston déplaçable (3) servant à la fermeture et à l'ouverture de la liaison entre l'entrée de pression de traitement (20) et la sortie de pression de traitement (21),
le piston (3) présentant, sur un premier côté, une première surface de pression de commande (31) qui peut être soumise à une première pression de commande et le piston (3) présentant, sur un deuxième côté, une deuxième surface de pression de commande (35) qui peut être soumise à une deuxième pression de commande,
le piston (3) étant déplaçable au moyen de la première pression de commande et de la deuxième pression de commande en vue de la fermeture et de l'ouverture de la liaison, **caractérisée**
- **en ce que**
a) la première surface de pression de commande forme une surface centrale (31) du piston (3) ou
b) la première surface de pression de commande forme, dans une surface supérieure du piston (3), une surface annulaire
et
- **en ce que** la deuxième surface de pression de commande forme une surface annulaire (35) faisant saillie vers l'extérieur à partir du piston (3).

10. Unité de soupapes selon la revendication 9, dans laquelle le piston (3) est réalisé de manière équilibrée en pression par rapport à la pression de traitement.

11. Unité de soupapes selon l'une des revendications 9 ou 10, dans laquelle la première surface de pression de commande forme une surface centrale (31) du piston (3), laquelle est disposée de manière renfoncée dans le piston (3).

12. Unité de soupapes selon l'une des revendications 9 à 11, dans laquelle l'espace de soupape est un premier espace de soupape (60) et dans laquelle le piston (3) présente au moins un alésage d'équilibrage de pression (33) qui relie le premier espace de soupape (60) à un deuxième espace de soupape (61) qui est disposé sur le côté du piston (3) opposé au premier espace de soupape (60).

13. Unité de soupapes selon l'une des revendications 9 à 12, dans laquelle la première surface de pression de commande (31) et la deuxième surface de pression de commande (35) sont de dimensions approximativement, de préférence exactement, égales.

14. Unité de soupapes selon l'une des revendications 9 à 13, dans laquelle le piston (3) présente une première surface de pression de traitement (30) et une deuxième surface de pression de traitement (32) opposée à la première surface de pression de traitement (30) et dans laquelle la première surface de pression de traitement (30) et la deuxième surface de pression de traitement (32) sont de dimensions approximativement, de préférence exactement, égales.

15. Unité de soupapes selon l'une des revendications 9 à 13, dans laquelle le piston (3) présente un axe longitudinal et dans laquelle la première surface de pression de commande (31) et la deuxième surface de pression de commande (35) sont disposées de manière adjacente l'une à l'autre le long de l'axe longitudinal.
